# EUROPÄISCHE PATENTSCHRIFT

(11) **EP 3 353 040 B1**
(45) Veröffentlichungstag und Bekanntmachung des Hinweises auf die Patenterteilung: **18.12.2019**
(21) Anmeldenummer: 16742288.0
(22) Anmeldetag: 22.07.2016
(51) Int. Cl.: B62D 1/184, B62D 1/185, B62D 1/19

(54) **EINSTELLBARE LENKSAEULE FUER EIN KRAFTFAHRZEUG**
ADJUSTABLE STEERING COLUMN FOR A MOTOR VEHICLE
COLONNE DE DIRECTION RÉGLABLE POUR VÉHICULE AUTOMOBILE

(30) Priorität: 21.09.2015 DE 102015115923
(43) Veröffentlichungstag der Anmeldung: 01.08.2018
(73) Patentinhaber: TRW Automotive GmbH, 73553 Alfdorf (DE); TRW-DAS A.S., 380 17 Dacice (CZ)
(72) Erfinder: LINGEMANN, Markus, 44809 Bochum (DE); LIESENFELD, Guido, 41470 Neuss (DE); MASINSKY, Petr, 58862 Myslibor (CZ)
(74) Vertreter: Prinz & Partner mbB
(86) Internationale Anmeldenummer: PCT/EP2016/067491
(87) Internationale Veröffentlichungsnummer: WO 2017/050460

(56) Entgegenhaltungen:
- JP-A- 2015 044 507
- US-A- 5 562 307

## Beschreibung

Die Erfindung hat eine einstellbare Lenksäule für ein Kraftfahrzeug zum Gegenstand, bei der eine Energie absorbierende Einheit derart an der Konsoleneinheit der Lenksäule angebracht ist, dass eine Kraftübertragung unabhängig von der gewählten Lenkradposition formschlüssig erfolgt.

Längenverstellbare Lenksäulen für Kraftfahrzeuge gibt es im Stand der Technik in vielen unterschiedlichen Ausführungsformen. Oft umfassen diese eine Energie absorbierende Einheit, die im Crashfall, insbesondere bei einem Auffahrunfall, die Verletzungsgefahr für den Fahrer dadurch mindert, dass beim Aufprall des Fahrers auf das Lenkrad dieses, gebremst durch die Energie absorbierende Einheit, zurückweicht.

Eine einstellbare Lenksäule gemäß dem Oberbegriff des Anspruchs 1 ist beispielsweise aus der US 5,562,307 A bekannt.

Die US 8,403,364 B2 zeigt ein weiteres Beispiel. Mit einem an einer Konsoleneinheit angebrachten Hebel kann dort eine Klinke betätigt werden, die in ein an der Lenkspindel-Lagereinheit befestigtes Bauteil mit Öffnungen für die unterschiedlich einstellbaren Lenkradpositionen eingreift. Dieses Bauteil ist gleichzeitig Bestandteil der Energie absorbierenden Einheit in Form einer Biegeeinheit, sodass in einem Crashfall, der eine hohe, über die Klinke übertragene Kraft zwischen der Lenkspindel-Lagereinheit und der Konsoleneinheit zur Folge hat, die entsprechende Relativbewegung gebremst wird.

Ein weiteres Ausführungsbeispiel aus dem Stand der Technik zeigt die DE 10 2010 03 689 A1. Auch hier ist eine Energie absorbierende Einheit, konkret eine Reißbiegelasche mit mehreren Öffnungen, an der Lenkspindel-Lagereinheit angebracht, und ein an der Konsoleneinheit befestigter Haken greift in eine der Öffnungen ein, was gleichzeitig der Einstellung der Länge der Lenksäule und der Kraftübertragung im Crashfall dient.

Zudem zeigt die JP 2015 0445607 A eine einstellbare Lenksäule, bei der die Energie absorbierende Einheit als Reißbiegelasche ausgeführt ist. Diese ist an einem Lagerrohr für die Lenkspindel befestigt.

Die Erfindung geht hiervon aus und ist auf eine einstellbare Lenksäule für ein Kraftfahrzeug gerichtet, die eine fahrzeugfest oder gelenkig am Fahrzeug angebrachte Konsoleneinheit aufweist. In dieser Konsoleneinheit ist eine Lenkspindel-Lagereinheit angeordnet, die relativ zur Konsoleneinheit zwecks Einstellens der Länge der Lenksäule axial verschiebbar ist. Ein an der Konsoleneinheit angebrachter Mechanismus zum Einstellen und Arretieren der axialen Länge der Lenksäule gibt im geöffneten Zustand eine axiale Relativverschiebung zwischen der Konsoleneinheit und der Lenkspindel-Lagereinheit frei, und arretiert im verriegelten Zustand die Lenkspindel-Lagereinheit axial an der Konsoleneinheit. Die Lenksäule weist weiterhin eine Energie absorbierende Einheit auf, die an der Konsoleneinheit angebracht ist und dort bei einem Verstellen der Länge der Lenksäule axial fixiert bleibt. Die Energie absorbierende Einheit erlaubt im verriegelten Zustand des Mechanismus zum Einstellen der axialen Länge der Lenksäule unter Energieaufnahme eine axiale Verschiebung der Lenkspindel-Lagereinheit relativ zur Konsoleneinheit.

Dadurch, dass die Energie absorbierende Einheit an der Konsoleneinheit angebracht ist, verringert sich im Vergleich zum Stand der Technik vorteilhaft die Zahl der beweglichen Teile der Lenksäule und damit vereinfacht sich ihr gesamter Aufbau. Die Position der zur Konsoleneinheit gehörenden Bauteile, welche nun auch die Energie absorbierende Einheit umfassen, wird von der Längeneinstellung der Lenksäule nicht beeinflusst, und sowohl bei der Längeneinstellung der Lenksäule als auch im Crashfall werden nur die unbedingt notwendigen Teile, nämlich die Lenkspindel mit ihrer Lagereinheit, relativ zur Konsoleneinheit bewegt und ggf. auch abgebremst.

Die Erfindung zeichnet sich zusätzlich dadurch aus, dass die Energie absorbierende Einheit einen Endanschlag für das Energieabsorptionselement aufweist, der im verriegelten Zustand des Mechanismus zum Einstellen einer axialen Länge der Lenksäule einen axialen Weg begrenzt, den der Lasteinleitungsabschnitt und mit ihm die Lenkspindel-Lagereinheit im Crashfall zurücklegt.

Darüber hinaus kann auch die Konsoleneinheit einen Endanschlag für die axiale Bewegung der Lenkspindel-Lagereinheit aufweisen, der im verriegelten Zustand des Mechanismus zum Einstellen einer axialen Länge der Lenksäule den axialen Weg begrenzt, den der Lasteinleitungsabschnitt und mit ihm die Lenkspindel-Lagereinheit zurücklegt.

Eine Ausführungsart der Erfindung sieht vor, dass die Lenkspindel-Lagereinheit Formschlusselemente wie z.B. Öffnungen und der Mechanismus zum Einstellen einer axialen Länge der Lenksäule ein verstellbares Verriegelungsbauteil aufweist, welches im verriegelten Zustand des Mechanismus zum Einstellen der axialen Länge der Lenksäule in mindestens ein Formschlusselement der Lenkspindel-Lagereinheit formschlüssig eingreift.

Zum Verstellen des Verriegelungsbauteils kann der Mechanismus zum Einstellen der Länge der Lenksäule vorteilhaft einen handbetätigten Hebel aufweisen, mit dessen Hilfe das Verriegelungsbauteil zwischen einer Öffnungsstellung und einer Verriegelungsstellung verstellbar ist. Die Bewegung des Verriegelungsbauteils erfolgt dabei insbesondere im Wesentlichen radial.

Die Energie absorbierende Einheit kann ein Energieabsorptionselement mit einem Lasteinleitungsabschnitt aufweisen, wobei das Energieabsorptionselement im verriegelten Zustand des Mechanismus zum Einstellen der axialen Länge der Lenksäule mit dem Verriegelungsbauteil zumindest axial gekoppelt ist. Das Energieabsorptionselement ist z.B. eine Biegelasche.

Die Energie absorbierende Einheit kann an der Konsoleneinheit starr oder auch um eine Schwenkachse verschwenkbar angeordnet sein. Ist sie verschwenkbar, so kann das Verriegelungsbauteil einstückig mit dem Lasteinleitungsabschnitt des Energieabsorptionselements ausgebildet sein. Dies hat den Vorteil, dass kein weiteres, gesondertes Bauteil erforderlich ist, das zum Einstellen der Lenkradposition mit der Lenkspindel-Lagereinheit in Kontakt treten muss.

Im Fall einer starren Verbindung hingegen kann der Lasteinleitungsabschnitt des Energieabsorptionselements eine Öffnung aufweisen, wobei das Verriegelungsbauteil sich durch diese Öffnung erstreckt und in der Öffnung radial verschieblich geführt ist. Alternativ kann das Energieabsorptionselement eine Anschlagfläche aufweisen, wobei das Verriegelungsbauteil im verriegelten Zustand des Mechanismus zum Einstellen der axialen Länge der Lenksäule axial an diese Anschlagfläche angrenzt und sich insbesondere axial an der Anschlagfläche abstützt. In beiden Fällen kann das Verriegelungsbauteil lösbar mit dem Mechanismus zum Einstellen der axialen Länge der Lenksäule verbunden sein.

Vorteilhaft können auch ein Sicherungsmechanismus, der den Fahrbetrieb des Kraftfahrzeugs nur im verriegelten Zustand des Mechanismus zum Einstellen der axialen Länge der Lenksäule gestattet, und/oder eine ergänzende Anordnung zum Verschwenken der Lenksäule vorgesehen sein.

Nachfolgend werden Ausführungsbeispiele der Erfindung anhand der Zeichnung näher beschrieben. In der Zeichnung zeigen:
Figur 1 die Ansicht eines ersten Ausführungsbeispiels einer einstellbaren Lenksäule für ein Kraftfahrzeug gemäß der Erfindung;
Figur 2 einen Längsschnitt durch die Lenksäule gemäß Figur 1;
Figuren 3a bis 3c Prinzipskizzen zum Ausführungsbeispiel gemäß Figur 1;
Figur 4 eine schematische Darstellung des Kraftflusses im Crashfall;
Figuren 5a bis 5c Prinzipskizzen eines zweiten Ausführungsbeispiels einer einstellbaren Lenksäule für ein Kraftfahrzeug gemäß der Erfindung; und
Figuren 6a bis 6c Prinzipskizzen eines dritten Ausführungsbeispiels einer einstellbaren Lenksäule für ein Kraftfahrzeug gemäß der Erfindung.

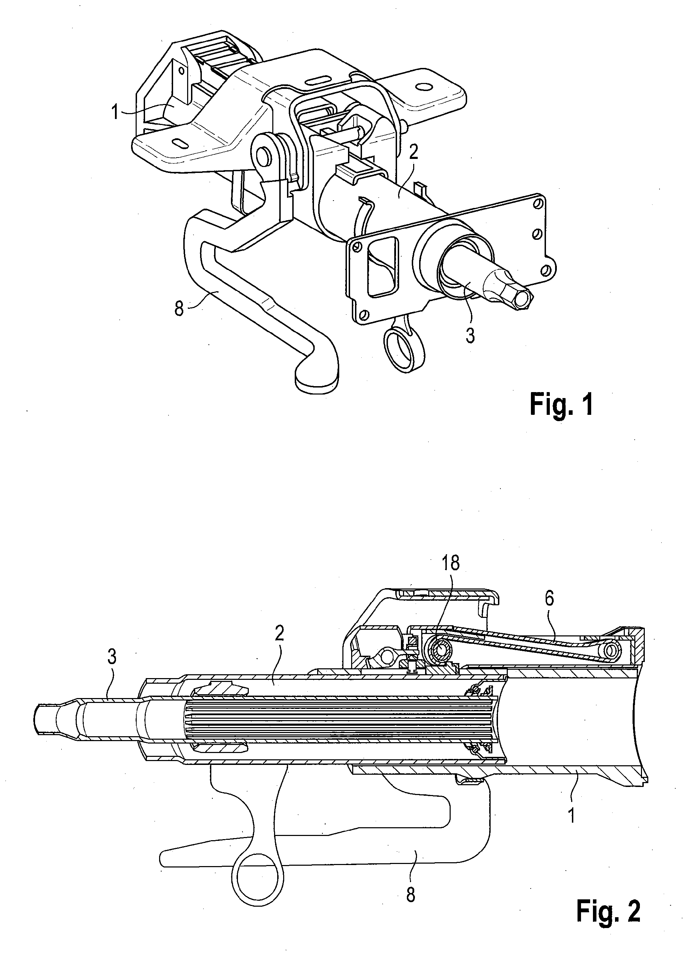

Wie die Figuren 1 bis 3 zeigen, weist ein erstes Ausführungsbeispiel der einstellbaren Lenksäule eine Konsoleneinheit 1 auf, die fest am Fahrzeug anzubringen ist. Alternativ kann die Konsoleneinheit auch gelenkig am Fahrzeug angebracht sein, um eine Höhenverstellung des Lenkrads zu ermöglichen. Zum Zweck des Einstellens der axialen Länge der Lenksäule entsprechend der Sitzposition des Fahrers ist in der Konsoleneinheit 1 eine axial verschiebbare Lenkspindel-Lagereinheit 2 angebracht, wobei sich die Begriffe "axial" und auch "radial" im Folgenden auf eine Rotationsachse des Lenkrads und der Lenkspindel 3 beziehen.

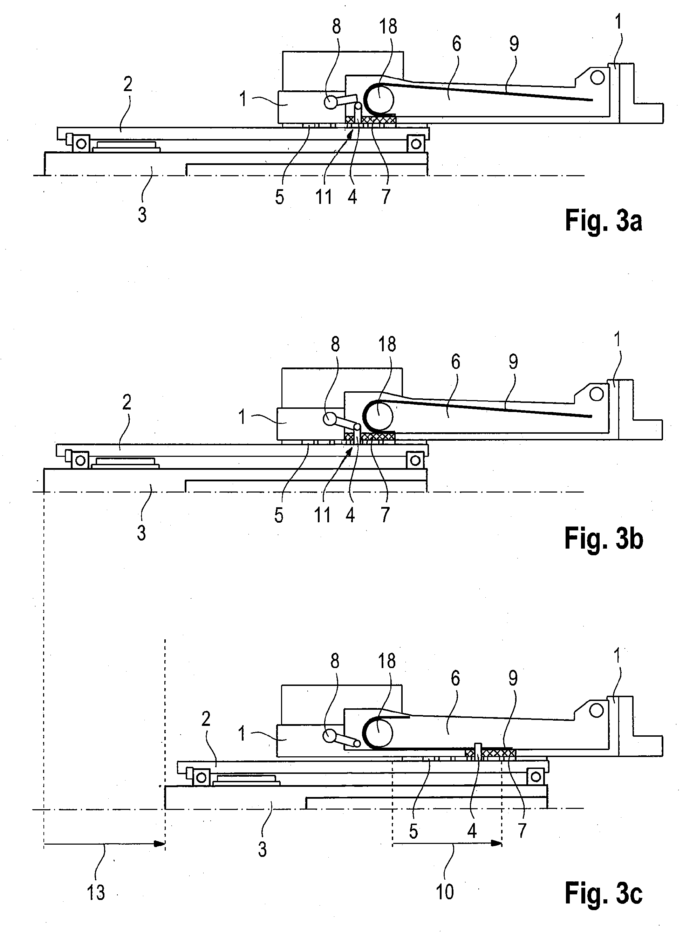

An der Konsoleneinheit 1 ist ein Mechanismus zum Einstellen und Arretieren der Länge der Lenksäule angebracht, der ein Verriegelungsbauteil 4 aufweist, das im Fahrbetrieb (Figur 3b) in mindestens ein Formschlusselement 5 einer Anordnung von mehreren solcher Formschlusselemente 5 an der Lenkspindel-Lagereinheit 2 eingreift. Diese Formschlusselemente 5 sind bevorzugt Öffnungen, wie sie die Figuren zeigen.

Für das Einstellen der Länge der Lenkung wird, wie es Figur 3a zeigt, der Eingriff des Verriegelungsbauteils 4 in die Formschlusselemente 5 der Lenkspindel-Lagereinheit 2 freigegeben, indem das Verriegelungsbauteil 4 im Wesentlichen radial verstellt wird; dann lassen sich die Lenkspindel 3 mit dem Lenkrad und die Lenkspindel-Lagereinheit 2 leicht axial zu einer anderen Eingriffsposition verschieben. Der Mechanismus zum Einstellen der axialen Länge der Lenksäule befindet sich folglich in einem geöffneten Zustand.

Weiterhin weist die Lenksäule eine Energie absorbierende Einheit 6 auf, die so ausgelegt und dimensioniert ist, dass sie im Crashfall, und hier insbesondere im Fall eines Auffahrunfalls, in der Lage ist, die kinetische Energie des Fahrers, der auf das Lenkrad auftrifft, zumindest zu einem Teil zu absorbieren, um so dessen Verletzungsgefahr zu mindern.

Die Energie absorbierende Einheit 6 weist dafür ein Energieabsorptionselement 9 mit einem Lasteinleitungsabschnitt 7 auf, das zum Zweck der Energieabsorption eine Kraft längs eines Weges 10 aufnimmt.

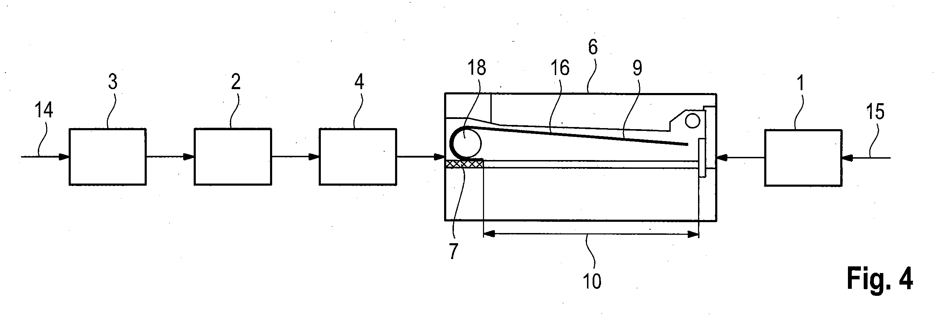

Den dabei stattfindenden Kraftfluss erläutert Figur 4. Die Energie absorbierende Einheit 6 ist derart an der Konsoleneinheit 1 angebracht, dass im Crashfall eine axiale Kraft (actio 14) vom Lenkrad mit der Lenkspindel 3 auf die Lenkspindel-Lagereinheit 2, von dort auf das Verriegelungsbauteil 4 und von diesem schließlich auf den Lasteinleitungsabschnitt 7 der Energie absorbierenden Einheit 6 formschlüssig übertragbar ist. Die Gegenkraft (reactio 15) wirkt von der Karosserie des Fahrzeugs über die Konsoleneinheit 1 auf die Befestigung der Energie absorbierenden Einheit 6 an der Konsoleneinheit 1.

Die Energie absorbierende Einheit 6 kann in weiten Grenzen beliebig ausgestaltet sein. Beispielsweise kann sie als Energieabsorptionselement 9 eine Biegelasche (vgl. Fig. 4) aufweisen, die dazu bestimmt ist, im Crashfall plastisch verformt zu werden. Andere Ausführungsarten sehen hier eine Reißlasche oder eine Reißbiegelasche aus Metall, insbesondere aus Stahl vor. In jedem Fall muss der Lasteinleitungsabschnitt 7 im Crashfall längs eines Weges 10 bewegt werden, um dabei die vorgesehene Energie (Kraft mal Weg) aufzunehmen, die dann bei der Deformation des Energieabsorptionselements 9 in Wärme umgewandelt wird. Dafür ist das Energieabsorptionselement 9 in einem verriegelten Zustand des Mechanismus zum Einstellen der axialen Länge der Lenksäule (vgl. Figuren 3b und 3c) mit dem Verriegelungsbauteil 4 axial gekoppelt.

Im ersten Ausführungsbeispiel der Erfindung (Figur 3) sind das Verriegelungsbauteil 4 und der Lasteinleitungsabschnitt 7 als zwei getrennte und einzeln wirkende Bauteile ausgebildet. Figur 3a zeigt das Verriegelungsbauteil 4 in einer Öffnungsstellung, und es kann mittels eines Hebels 8 in eine Verriegelungsstellung für den Fahrbetrieb gemäß Figur 3b gebracht werden, in der es in ein Formschlusselement 5 in der Lenkspindel-Lagereinheit 2 eingreift. Dafür ist eine an der Konsoleneinheit 1 angebrachte radiale Führung 11 als axiale Kopplung des Verriegelungsbauteils 4 vorgesehen, die sicherstellt, dass eine axiale Kraft auf das Lenkrad und die Lenkspindel 3, deren Betrag unterhalb der Crash-Grenze liegt, keine axiale Verschiebung von Lenkrad, Lenkspindel 3 und Lenkspindel-Lagereinheit 2 auslösen kann. Dafür weist der als Führung 11 ausgebildete Lasteinleitungsabschnitt 7 des Energieabsorptionselements 9 eine Öffnung auf, durch die sich das Verriegelungsbauteil 4 erstreckt, und in der es radial verschieblich geführt ist.

Vor einem Crash (Figur 3b) dient der Lasteinleitungsabschnitt 7 somit als radiale Führung 11, und das Verriegelungsbauteil 4 ist lösbar mit dem Mechanismus zum Einstellen der axialen Länge der Lenksäule verbunden.

Im Crashfall erreicht die Kraft auf den Lasteinleitungsabschnitt 7 einen so hohen Betrag, dass er sich längs des Weges 10 axial bewegt, wodurch der Energie absorbierende Prozess stattfindet. Bei einer solchen axialen Verschiebung der Lenkspindel-Lagereinheit relativ zur Konsoleneinheit im verriegelten Zustand des Mechanismus zum Einstellen der axialen Länge der Lenksäule löst sich das Verriegelungsbauteil 4 von dem Mechanismus zum Einstellen der axialen Länge der Lenksäule. Das als Biegelasche ausgebildete Energieabsorptionselement 9 wird über einen Umlenkbolzen 18 gezogen und zur Energieabsorption plastisch verformt.

Figur 3c zeigt die dadurch entstehende Situation nach einem Crash. Der Lasteinleitungsabschnitt 7 befindet sich nun nicht mehr in seiner Ausgangsposition an der Energie absorbierenden Einheit 6, sondern er ist zwecks Kraftübertragung axial verschoben worden. Auch das Lenkrad (in Figur 3 links, nicht dargestellt), die Lenkspindel 3 und die Lenkspindel-Lagereinheit 2 haben sich durch den auf das Lenkrad auftreffenden Fahrer um die in Figur 3c als Pfeil 13 angedeutete Strecke gegenüber der Konsoleneinheit 1 verschoben.

Dabei ist das Verriegelungsbauteil 4 in Eingriff mit der Lenkspindel-Lagerungseinheit 2 geblieben und hat formschlüssig Kraft auf den Lasteinleitungsabschnitt 7 übertragen. Dies hat die gewünschte Energie absorbierende Deformation des Energieabsorptionselements 9 ausgelöst.

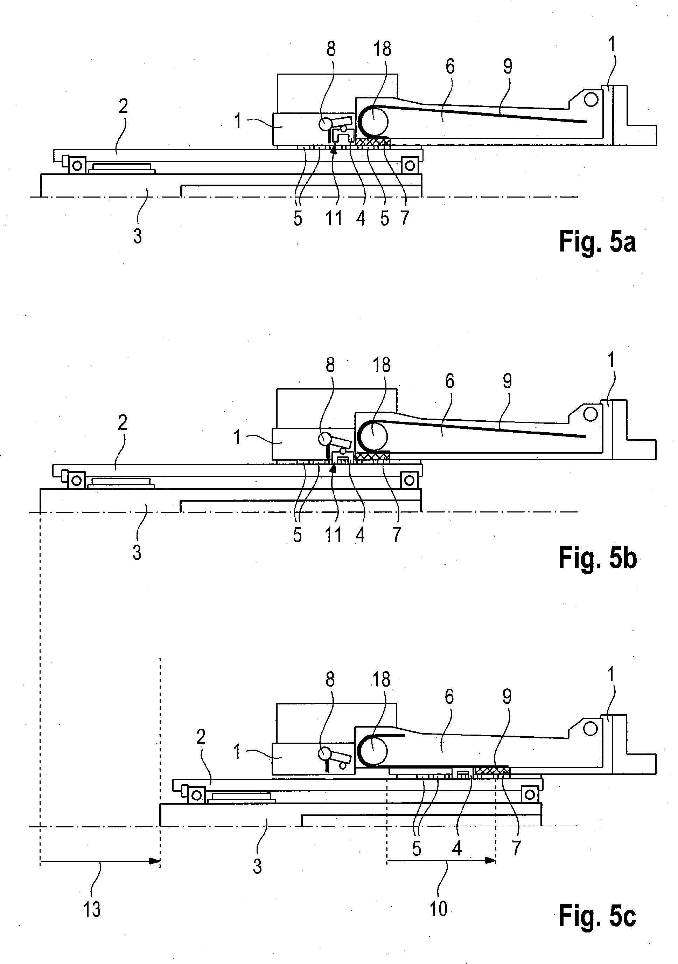

Figur 5 zeigt ein zweites Ausführungsbeispiel der Erfindung, das sich von dem Ausführungsbeispiel nach Figur 3 nur dadurch unterscheidet, dass das Verriegelungsbauteil 4 in zwei oder mehr als Öffnungen ausgebildete Formschlusselemente 5 der Lenkspindel-Lagereinheit 2 eingreift, was eine sicherere Kraftübertragung gestattet. Die Öffnungen sind dafür bevorzugt äquidistant anzuordnen.

Im Unterschied zum ersten Ausführungsbeispiel weist der Lasteinleitungsabschnitt 7 des Energieabsorptionselements 9 keine Öffnung zur Führung des Verriegelungsbauteils 4 auf, sondern eine Anschlagfläche, wobei das Verriegelungsbauteil 4 im verriegelten Zustand des Mechanismus zum Einstellen der axialen Länge der Lenksäule axial an diese Anschlagfläche angrenzt.

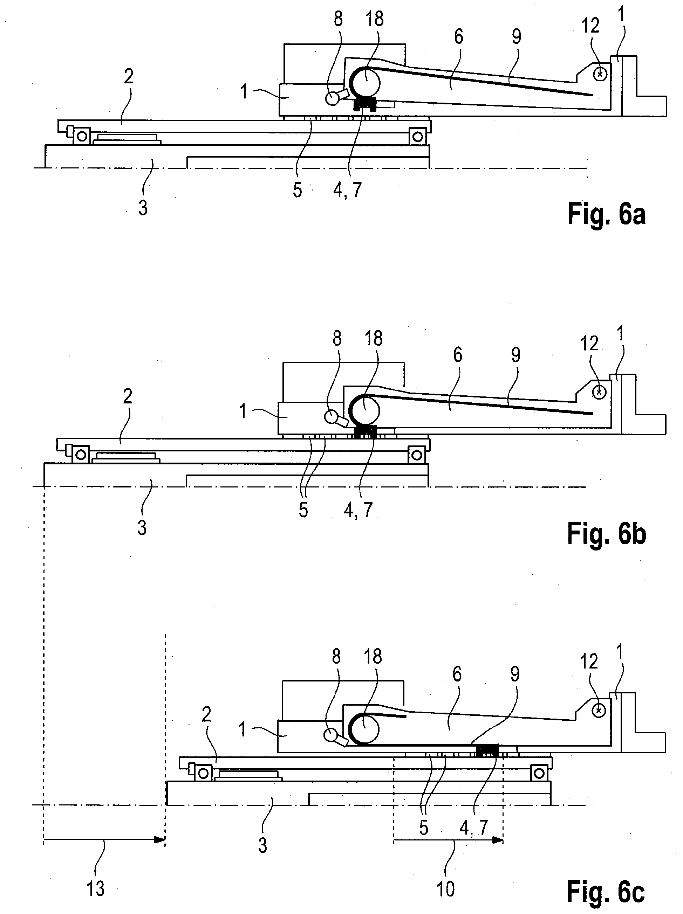

Figur 6 zeigt ein drittes Ausführungsbeispiel der Erfindung. Hier sind der Lasteinleitungsabschnitt 7 der Energie absorbierenden Einheit 6 und das Verriegelungsbauteil 4 des Mechanismus zum Einstellen der Länge der Lenksäule einstückig, also als ein einziges Bauteil ausgebildet, so dass dieses einheitliche Bauteil (nachfolgend wird dafür nur Bezugszeichen 7 verwendet), im Unterschied zur ersten und zweiten Ausführungsart der Lenksäule, beide Funktionen gleichzeitig übernimmt. Um dies zu erreichen, ist die Energie absorbierende Einheit 6 zum Zweck des Einstellens der Länge der Lenksäule gemäß Figur 6a derart um eine Schwenkachse 12 verschwenkbar an der Konsoleneinheit 1 angebracht, dass der Lasteinleitungsabschnitt 7 im Fahrbetrieb (Figur 6b) unmittelbar in Eingriff mit mindestens einem der Formschlusselemente 5 in der Lenkspindel-Lagereinheit 2 ist, und zum Einstellen der Länge der Lenksäule (Figur 6a) diesen Eingriff freigibt.

Zum Einstellen und Arretieren der Länge der Lenksäule weist die Konsoleneinheit 1 auch in dieser dritten Ausführungsart einen handbetätigten Hebel 8 auf, mit dessen Hilfe nun aber die Energie absorbierende Einheit 6 um die Schwenkachse 12 verschwenkt wird, bis der Lasteinleitungsabschnitt 7 die Formschlusselementen 5 der Lenkspindel-Lagereinheit 2 freigibt (Figur 6a) bzw. in diese eingreift (Figur 6b).

Nach einem Crashfall ergibt sich bei diesem dritten Ausführungsbeispiel die in Figur 6c dargestellte Situation. Der Kraftfluss beim Crash ist dabei derselbe wie für die anderen Ausführungsarten in Figur 4 dargestellt, nur dass die Bauteile 4 und 7 nun ein einziges, gemeinsames Bauteil bilden.

Neben einem Endanschlag für die Verkürzung der Lenksäule, der die mögliche Verschiebung der Lenkspindel-Lagereinheit 2 mit der Lenkspindel 3 im Crashfall begrenzt, kann auch die Energie absorbierende Einheit 6 einen Endanschlag für den Lasteinleitungsabschnitt 7 aufweisen. Dieser Endanschlag kommt dann zum Zuge, wenn der Crash bei einer weit herausgezogenen Position des Lenkrads erfolgt und hat die vorteilhafte Wirkung, dass sich das Lenkrad dann nicht mehr weiter nach vorn bewegen und wieder beschleunigen kann, wenn die Energie absorbierende Einheit 6 ihre maximale Energie aufgenommen hat.

Vorteilhaft sind auch ein Sicherungsmechanismus, der den Fahrbetrieb nur in der eingreifenden Stellung des Verriegelungsbauteils 4 gestattet, und eine ergänzende Anordnung zum Verschwenken der Lenksäule.

## Patentansprüche

1. Einstellbare Lenksäule für ein Kraftfahrzeug mit
einer fahrzeugfesten oder gelenkig am Fahrzeug angebrachten Konsoleneinheit (1),
einer in der Konsoleneinheit (1) angeordneten Lenkspindel-Lagereinheit (2), die relativ zur Konsoleneinheit (1) axial verschiebbar ist,
einem an der Konsoleneinheit (1) angebrachten Mechanismus zum Einstellen einer axialen Länge der Lenksäule, der in einem geöffneten Zustand eine axiale Relativverschiebung zwischen der Konsoleneinheit (1) und der Lenkspindel-Lagereinheit (2) freigibt sowie in einem verriegelten Zustand die Lenkspindel-Lagereinheit (2) axial an der Konsoleneinheit (1) arretiert, und
einer Energie absorbierenden Einheit (6), die im verriegelten Zustand des Mechanismus zum Einstellen der axialen Länge der Lenksäule eine axiale Verschiebung der Lenkspindel-Lagereinheit (2) relativ zur Konsoleneinheit (1) unter Energieaufnahme erlaubt,
wobei die Energie absorbierende Einheit (6) an der Konsoleneinheit (1) angebracht ist,
**dadurch gekennzeichnet, dass** die Energie absorbierende Einheit (6) einen Endanschlag (9) für ein Energieabsorptionselement aufweist, der im verriegelten Zustand des Mechanismus zum Einstellen einer axialen Länge der Lenksäule einen axialen Weg (10) begrenzt, den das Energieabsorptionselement und mit ihm die Lenkspindel-Lagereinheit (2) zurücklegt.

2. Einstellbare Lenksäule nach Anspruch 1, **dadurch gekennzeichnet, dass** die Lenkspindel-Lagereinheit (2) Formschlusselemente (5) und der Mechanismus zum Einstellen einer axialen Länge der Lenksäule ein verstellbares Verriegelungsbauteil (4) aufweist, welches im verriegelten Zustand des Mechanismus zum Einstellen der axialen Länge der Lenksäule in mindestens ein Formschlusselement (5) der Lenkspindel-Lagereinheit (2) formschlüssig eingreift.

3. Einstellbare Lenksäule nach Anspruch 2, **dadurch gekennzeichnet, dass** der Mechanismus zum Einstellen der Länge der Lenksäule einen handbetätigten Hebel (8) aufweist, mittels dem das Verriegelungsbauteil (4) zwischen einer Öffnungsstellung und einer Verriegelungsstellung verstellbar ist.

4. Einstellbare Lenksäule nach Anspruch 2 oder 3, **dadurch gekennzeichnet, dass** die Energie absorbierende Einheit (6) ein Energieabsorptionselement (16) mit einem Lasteinleitungsabschnitt (7) aufweist, wobei das Energieabsorptionselement (16) im verriegelten Zustand des Mechanismus zum Einstellen der axialen Länge der Lenksäule mit dem Verriegelungsbauteil (4) axial gekoppelt ist.

5. Einstellbare Lenksäule nach einem der Ansprüche 1 bis 4, **dadurch gekennzeichnet, dass** die Energie absorbierende Einheit (6) um eine Schwenkachse (12) verschwenkbar an der Konsoleneinheit (1) angebracht ist.

6. Einstellbare Lenksäule nach Anspruch 4 und 5, **dadurch gekennzeichnet, dass** das Verriegelungsbauteil (4) einstückig mit dem Lasteinleitungsabschnitt (7) des Energieabsorptionselements (16) ausgebildet ist.

7. Einstellbare Lenksäule nach einem der Ansprüche 1 bis 4, **dadurch gekennzeichnet, dass** die Energie absorbierende Einheit (6) mit der Konsoleneinheit (1) starr verbunden ist.

8. Einstellbare Lenksäule nach Anspruch 4 und 7, **dadurch gekennzeichnet, dass** der Lasteinleitungsabschnitt (7) des Energieabsorptionselements (16) eine Öffnung aufweist, wobei das Verriegelungsbauteil (4) sich durch diese Öffnung erstreckt und in der Öffnung radial verschieblich geführt ist.

9. Einstellbare Lenksäule nach Anspruch 4 und 7, **dadurch gekennzeichnet, dass** der Lasteinleitungsabschnitt (7) des Energieabsorptionselements (16) eine Anschlagfläche aufweist, wobei das Verriegelungsbauteil (4) im verriegelten Zustand des Mechanismus zum Einstellen der axialen Länge der Lenksäule axial an diese Anschlagfläche angrenzt.

10. Einstellbare Lenksäule nach Anspruch 8 oder 9, **dadurch gekennzeichnet, dass** das Verriegelungsbauteil (4) lösbar mit dem Mechanismus zum Einstellen der axialen Länge der Lenksäule verbunden ist.

11. Einstellbare Lenksäule nach einem der Ansprüche 1 bis 10, **dadurch gekennzeichnet, dass** die Konsoleneinheit (1) einen Endanschlag für die axiale Bewegung der Lenkspindel-Lagereinheit (2) aufweist, der im verriegelten Zustand des Mechanismus zum Einstellen einer axialen Länge der Lenksäule den axialen Weg (10) begrenzt, den das Energieabsorptionselement (7) und mit ihm die Lenkspindel-Lagereinheit (2) zurücklegt.

12. Einstellbare Lenksäule nach einem der Ansprüche 1 bis 11, **gekennzeichnet durch** einen Sicherungsmechanismus, der einen Fahrbetrieb des Kraftfahrzeugs nur im verriegelten Zustand des Mechanismus zum Einstellen einer axialen Länge der Lenksäule gestattet.

13. Einstellbare Lenksäule nach einem der Ansprüche 1 bis 12, **gekennzeichnet durch** eine ergänzende Anordnung zum Verschwenken der Lenksäule.

## Claims

1. An adjustable steering column for a motor vehicle, comprising
a console unit (1) which is vehicle-fixed or articulated to the vehicle;
a steering shaft bearing unit (2) which is arranged in the console unit (1) and is axially displaceable relative to the console unit (1);
a mechanism mounted to the console unit (1) and provided for adjusting an axial length of the steering column, the mechanism, when in an open condition, enabling an axial relative displacement between the console unit (1) and the steering shaft bearing unit (2) and, when in a locked condition, axially fixing the steering shaft bearing unit (2) in place at the console unit (1), and
an energy absorbing unit (6) which, in the locked condition of the mechanism for adjusting the axial length of the steering column, allows an axial displacement of the steering shaft bearing unit (2) relative to the console unit (1), accompanied by an absorption of energy,
wherein the energy absorbing unit (6) is mounted to the console unit (1),
**characterized in that** the energy absorbing unit (6) includes an end stop (9) for an energy absorption element, the end stop, in the locked condition of the mechanism for adjusting an axial length of the steering column, limiting an axial distance (10) that is covered by the energy absorption element and, along with it, by the steering shaft bearing unit (2).

2. The adjustable steering column according to claim 1, **characterized in that** the steering shaft bearing unit (2) includes form-fitting elements (5), and the mechanism for adjusting an axial length of the steering column includes an adjustable locking component (4), which in the locked condition of the mechanism for adjusting the axial length of the steering column engages in a form-fitting manner in at least one form-fitting element (5) of the steering shaft bearing unit (2).

3. The adjustable steering column according to claim 2, **characterized in that** the mechanism for adjusting the length of the steering column includes a manually operated lever (8) by means of which the locking component (4) is adjustable between an opening position and a locking position.

4. The adjustable steering column according to claim 2 or 3, **characterized in that** the energy absorbing unit (6) includes an energy absorption element (16) having a load introduction section (7), the energy absorption element (16) being axially coupled to the locking component (4) in the locked condition of the mechanism for adjusting the axial length of the steering column.

5. The adjustable steering column according to any of claims 1 to 4, **characterized in that** the energy absorbing unit (6) is mounted to the console unit (1) for swiveling about a swivel axis (12).

6. The adjustable steering column according to claims 4 and 5, **characterized in that** the locking component (4) is formed in one piece with the load introduction section (7) of the energy absorption element (16).

7. The adjustable steering column according to any of claims 1 to 4, **characterized in that** the energy absorbing unit (6) is rigidly connected to the console unit (1).

8. The adjustable steering column according to claims 4 and 7, **characterized in that** the load introduction section (7) of the energy absorption element (16) has an opening, the locking component (4) extending through this opening and being radially displaceably guided in the opening.

9. The adjustable steering column according to claims 4 and 7, **characterized in that** the load introduction section (7) of the energy absorption element (16) has a stop surface, the locking component (4) being axially adjacent to this stop surface in the locked condition of the mechanism for adjusting the axial length of the steering column.

10. The adjustable steering column according to claim 8 or 9, **characterized in that** the locking component (4) is releasably connected to the mechanism for adjusting the axial length of the steering column.

11. The adjustable steering column according to any of claims 1 to 10, **characterized in that** the console unit (1) includes an end stop for the axial movement of the steering shaft bearing unit (2), the end stop, in the locked condition of the mechanism for adjusting an axial length of the steering column, limiting the axial distance (10) that is covered by the energy absorption element (7) and, along with it, by the steering shaft bearing unit (2).

12. The adjustable steering column according to any of claims 1 to 11, **characterized by** a safety mechanism which permits a driving operation of the motor vehicle only in the locked condition of the mechanism for adjusting an axial length of the steering column.

13. The adjustable steering column according to any of claims 1 to 12, **characterized by** a supplementary arrangement for swiveling the steering column.

## Revendications

1. Colonne de direction ajustable pour véhicule automobile, présentant
une unité de console (1) qui est solidaire au véhicule ou articulée sur le véhicule,
une unité d'appui d'arbre de direction (2) qui est agencée dans l'unité de console (1) et qui est axialement déplaçable par rapport à l'unité de console (1),
un mécanisme d'ajustage d'une longueur axiale de la colonne de direction, qui est monté sur l'unité de console (1) et qui, dans un état ouvert, autorise un déplacement relatif axial entre l'unité de console (1) et l'unité d'appui d'arbre de direction (2), et, dans un état verrouillé, arrête l'unité d'appui d'arbre de direction (2) axialement sur l'unité de console (1), et
une unité absorbant l'énergie (6), qui, à l'état verrouillé du mécanisme d'ajustage de la longueur axiale de la colonne de direction, permet un déplacement axial de l'unité d'appui d'arbre de direction (2) par rapport à l'unité de console (1) en absorbant de l'énergie,
l'unité absorbant l'énergie (6) étant montée sur l'unité de console (1),
**caractérisée en ce que** l'unité absorbant l'énergie (6) présente une butée de fin de course (9) pour un élément d'absorption d'énergie qui, à l'état verrouillé du mécanisme d'ajustage d'une longueur axiale de la colonne de direction, limite un trajet axial (10) parcouru par l'élément d'absorption d'énergie et ensemble avec celui-ci par l'unité d'appui d'arbre de direction (2).

2. Colonne de direction ajustable selon la revendication 1, **caractérisée en ce que** l'unité d'appui d'arbre de direction (2) présente des éléments de complémentarité de formes (5), et **en ce que** le mécanisme d'ajustage d'une longueur axiale de la colonne de direction présente un composant de verrouillage réglable (4) qui, à l'état verrouillé du mécanisme d'ajustage de la longueur axiale de la colonne de direction, s'engage dans un au moins un élément de complémentarité de forme (5) de l'unité d'appui d'arbre de direction (2) par complémentarité de formes.

3. Colonne de direction ajustable selon la revendication 2, **caractérisée en ce que** le mécanisme d'ajustage de la longueur axiale de la colonne de direction présente un levier (8) à commande manuelle au moyen duquel le composant de verrouillage (4) est réglable entre une position d'ouverture et une position de verrouillage.

4. Colonne de direction ajustable selon la revendication 2 ou 3, **caractérisée en ce que** l'unité absorbant l'énergie (6) présente un élément d'absorption d'énergie (16) qui comporte un tronçon d'introduction de charge (7), l'élément d'absorption d'énergie (16), à l'état verrouillé du mécanisme d'ajustage de la longueur axiale de la colonne de direction, étant axialement couplé au composant de verrouillage (4).

5. Colonne de direction ajustable selon l'une des revendications 1 à 4, **caractérisée en ce que** l'unité absorbant l'énergie (6) est montée sur l'unité de console (1) de manière à être apte à pivoter autour d'un axe de pivotement (12).

6. Colonne de direction ajustable selon les revendications 4 et 5, **caractérisée en ce que** le composant de verrouillage (4) est réalisé d'un seul tenant avec le tronçon d'introduction de charge (7) de l'élément d'absorption d'énergie (16).

7. Colonne de direction ajustable selon l'une des revendications 1 à 4, **caractérisée en ce que** l'unité absorbant l'énergie (6) est reliée de manière rigide à l'unité de console (1).

8. Colonne de direction ajustable selon les revendications 4 et 7, **caractérisée en ce que** le tronçon d'introduction de charge (7) de l'élément d'absorption d'énergie (16) présente un orifice, le composant de verrouillage (4) s'étendant à travers cet orifice et étant guidé de manière radialement déplaçable dans l'orifice.

9. Colonne de direction ajustable selon les revendications 4 et 7, **caractérisée en ce que** le tronçon d'introduction de charge (7) de l'élément d'absorption d'énergie (16) présente une surface de butée, le composant de verrouillage (4) étant axialement adjacent à cette surface de butée à l'état verrouillé du mécanisme d'ajustage de la longueur axiale de la colonne de direction.

10. Colonne de direction ajustable selon la revendication 8 ou 9, **caractérisée en ce que** le composant de verrouillage (4) est relié de manière détachable au mécanisme d'ajustage de la longueur axiale de la colonne de direction.

11. Colonne de direction ajustable selon l'une des revendications 1 à 10, **caractérisée en ce que** l'unité de console (1) présente une butée de fin de course pour le mouvement axial de l'unité d'appui d'arbre de direction (2), qui, à l'état verrouillé du mécanisme d'ajustage d'une longueur axiale de la colonne de direction, limite le trajet axial (10) parcouru par l'élément d'absorption d'énergie (7) et ensemble avec celui-ci par l'unité d'appui d'arbre de direction (2).

12. Colonne de direction ajustable selon l'une des revendications 1 à 11, **caractérisée par** un mécanisme d'arrêt qui autorise un mode de conduite du véhicule automobile uniquement à l'état verrouillé du mécanisme d'ajustage d'une longueur axiale de la colonne de direction.

13. Colonne de direction ajustable selon l'une des revendications 1 à 12, **caractérisée par** un agencement supplémentaire pour le pivotement de la colonne de direction.
